# EUROPÄISCHE PATENTSCHRIFT

(11) **EP 1 130 368 B1**
(45) Veröffentlichungstag und Bekanntmachung des Hinweises auf die Patenterteilung: **18.08.2010**
(21) Anmeldenummer: 00125655.1
(22) Anmeldetag: 23.11.2000
(51) Int. Cl.: G01F 23/26

(54) **Messgerät mit Seilsonde und Verfahren zum Kürzen der Seilsonde**
Measuring device with cord level detector and method for shortening the cord
Dispositif de mesure à détecteur suspendu à une ligne et procédé pour raccourcir la ligne

(30) Priorität: 25.02.2000 DE 10009067
(43) Veröffentlichungstag der Anmeldung: 05.09.2001
(73) Patentinhaber: Endress + Hauser GmbH + Co. KG, 79689 Maulburg (DE)
(72) Erfinder: Schmidt, Robert, 79585 Steinen (DE)
(74) Vertreter: Andres, Angelika Maria

(56) Entgegenhaltungen:
- EP-A- 0 857 954
- DE-U- 9 103 122
- DE-U- 29 518 916

## Beschreibung

Die Erfindung betrifft ein Meßgerät mit einer Seilsonde und ein Verfahren zum Kürzen des Seiles einer Seilsonde.

Es sind verschiedene Ausführungen von Meßgeräten mit Seilsonden bekannt, die üblicherweise ein Gehäuse umfassen, in dem eine Meßgeräte-Elektronik untergebracht und an dem eine seil-, kabel- oder stabförmige Sonde angebracht ist. Aus der Füllstandsmeßtechnik ist z. B. ein kapazitives Meßgerät bekannt, bei dem wenigstens eine zur Messung dienende Elektrode des Meßkondensators seil- oder stabförmig ausgebildet ist, die in das zu messende Medium eintaucht. Bei einem weiteren Meßgerät der Füllstandsmeßtechnik werden z. B. elektromagnetische Pulse auf einem stab- oder seilförmigen, in das zu messende Medium eintauchenden Wellenleiter zur Oberfläche des Mediums gesendet. Außerdem wird in der Füllstandsmeßtechnik ein hydrostatisches Meßgerät verwendet, bei dem am Ende eines Kabels ein Drucksensor montiert ist, der in das zu messende Medium hinabgelassen wird. Nachfolgend werden all diese seil-, kabel- oder stabförmigen mit einem Meßgerät verbundenen Sonden der Einfachheit halber mit dem Begriff "Seilsonden" bezeichnet. Die Stäbe, Kabel oder Seile werden demgemäß der Einfachheit halber als "Seile" bezeichnet.

Die erwähnten Meßgeräte mit Seilsonden werden üblicherweise an oder auf einem das zu messende Medium enthaltenden Behälter montiert, wobei häufig das Gehäuse in oder auf einer Behälterwandung so befestigt wird, daß die Seilsonde ins Innere des Behälters und in das Medium hineinragt. Die Seilsonden sind entweder selbst elektrisch leitend oder weisen, im Sinne von Kabeln, im Innern wenigstens einen elektrischen Leiter auf. Die Seile bzw. die elektrischen Leiter sind üblicherweise mit einer Meßgeräte-Elektronik verbunden, in der die Meßsignale erzeugt bzw. bearbeitet werden. Die Meßgeräte-Elektronik wiederum ist üblicherweise mit einer Meß- bzw. Schaltwarte oder einer anderen übergeordneten Einheit verbunden, wo die Füllstands-Meßwerte be- und verarbeitet werden. Eine derartige Sonde ist z.B. aus EP 0 857 954 bekannt.

All diesen Seilsonden ist gemeinsam, daß ihre Länge vom erwarteten bzw. zu messenden Füllstand des Mediums abhängt. Soll im Zuge von veränderten Meßbedingungen die Seilsonde verkürzt werden, so ist üblicherweise die Kürzung des Seiles und seine Bearbeitung, insbesondere seiner Befestigung, problematisch und umständlich durchzuführen. Häufig ist dazu Spezialwerkzeug erfordert, so daß die Arbeiten in vielen Fällen nur beim Hersteller bzw. Lieferanten des Meßgerätes vorgenommen werden können. Darüberhinaus ist bei verschiedenen Geräten die elektrische Verbindung der Seilsonde mit der Meßgeräte-Elektronik mit der mechanischen Befestigung des Seiles derart verknüpft, daß eine Kürzung der Seilsonde auf einfache Weise nicht möglich ist.

Es ist daher eine Aufgabe der Erfindung, ein Meßgerät mit einer Seilsonde und ein Verfahren anzugeben, bei und mit dem die Seilsonde von einem Endbenutzer auf einfache Weise gekürzt werden kann und zwar möglichst vor Ort und ohne daß Spezialwerkzeuge oder sonstige herstellerspezifische Werkzeuge verwendet werden müssen.

Nach der Erfindung wird diese Aufgabe gelöst durch ein Meßgerät
- mit einem eine Meßgeräte-Elektronik aufnehmenden Gehäuse,
- mit einer darin befestigten Seilsonde,
   -- die eine im Inneren des Gehäuses vorgesehene Einbauhülse mit einem Befestigungskragen umfaßt,
   -- die im Innern des Gehäuses durch eine Drehung um ihre Längsachse befestigt oder demontierbar ist
   -- und deren Arbeitsposition mittels des Befestigungskragens durch mehrere Schrauben nach Art eines Bajonett-Verschlusses fixiert wird.

Eine vorteilhafte Ausführungsform der Erfindung sieht vor, daß die Seilsonde ein Seil umfaßt, das in der Einbauhülse mittel eines das Seil umschließenden Klemmkonus befestigt ist.

In einer weiteren vorteilhaften Ausführungsform ist die Einbauhülse von einer Anschlußhülse des Gehäuses umschlossen.

Noch andere Ausführungsformen der Erfindung sehen vor, daß im Innern des Seils der Seilsonde befindliche und aus der Einbauhülse herausgeführte elektrische Leiter mit einem Stecker oder einer Steckerbuchse verbunden sind, wobei der Stecker oder die Steckerbuchse von der Einbauhülse aufgenommen werden können.

Weitere vorteilhafte Ausführungsformen des Meßgeräts nach der Erfindung betreffen eine Abdichtung eines Innenraums der Anschlußhülse gegenüber einem zu messenden Medium durch eine im Innern der Anschlußhülse befindliche und das Seil umschließende konischen Dichtung.

In anderen besonderen Ausführungsformen der Erfindung werden weitere Dichtungen verwendet, um einen die Meßgeräte-Elektronik aufnehmenden Teil des Gerätegehäuses gegenüber einem Innenraum der die Seilsonde aufnehmenden Anschlußhülse bzw. gegenüber einem Innenraum der Einbauhülse abzudichten.

Weiterhin wird nach der Erfindung die Aufgabe gelöst durch ein Verfahren zum Kürzen eines in einem Gehäuse eines Meßgerätes befestigten Seils einer Seilsonde mit folgenden Verfahrensschritten:
a) nach Öffnen des Gehäuses wird eine Meßgeräte-Elektronik entnommen;
b) elektrische Verbindungen zwischen der Meßgeräte-Elektronik und der Seilsonde werden unterbrochen;
c) mehrere Schrauben, die einen Befestigungskragen an einer das Seil umschließenden Einbauhülse nach Art eines Bajonett-Verschlusses halten, werden gelöst, wodurch wenigstens eine das Seil umschließende und gegenüber dem zu messenden Medium wirkende Dichtung in einer das Seil der Seilsonde umgebenden Anschlußhülse entlastet wird;
d) die Einbauhülse wird zusammen mit dem Seil und der Dichtung aus dem Gehäuse gezogen;
e) das Seil wird um eine gewünschte Länge gekürzt;
f) über das verbliebene Seil der Seilsonde wird erneut eine Dichtung, eine Einbauhülse und ein Klemmkonus gezogen und das Seil durch Einziehen in die neue Einbauhülse darin befestigt;
g) dann wird die Einbauhülse im Gerätgehäuse befestigt;
h) die elektrischen Verbindungen zwischen der Seilsonde und der Meßgeräte-Elektronik werden wieder hergestellt;
i) nach Einbau der Meßgeräte-Elektronik wird das Gehäuse wieder verschlossen.

Ein besonderer Vorteil der Erfindung ist, daß die einzigen Werkzeuge, die zur Kürzung der Seilsonde erforderlich sind, ein üblicher Schraubendreher, eine Zange zum Durch- bzw. Abtrennen des Seils der Seilsonde und/oder ein messerähnliches Schneidwerkzeug zum Freilegen von darin enthaltenen elektrischen Leitern sind.

Ein weiterer Vorteil der Erfindung ist, daß eine Kürzung des Seils der Seilsonde erfolgen kann, ohne daß das Gehäuse des Meßgerätes von einem das zu messende Medium enthaltenden Behälter demontiert werden muß.

Nachfolgend wird die Erfindung anhand eines Ausführungsbeispiels und unter Bezug auf die beigefügte Zeichnung beschrieben und erläutert. Gleiche Merkmale und Teile der unterschiedlichen Ausführungsformen der Erfindung sind zur Vereinfachung mit gleichen Bezugszeichen versehen. Es zeigen:
Fig. 1 ein Ausführungsbeispiel eines Meßgerätes mit einer Seilsonde nach der Erfindung mit im wesentlichen aufgebrochenem Gehäuse, wobei Einzelheiten im Innern des Gehäuses in einem Längsschnitt gezeigt sind;
Fig. 2 das Meßgeräte mit Seilsonde nach Fig. 1 in einem gegenüber Fig. 1 um 90° um eine Längsachse gedrehten Längsschnitt;
Fig. 3 eine Einzelheit X des Meßgeräts nach Fig. 1 entsprechend der dortigen Markierung;
Fig. 4 eine perspektivische Ansicht der Seilsonde des Meßgeräts nach Fig. 1 mit auseinander gezogenen Einzelteilen;
Fig. 5 eine Einzelheit Z des Meßgeräts nach Fig. 4 entsprechend der dortigen Markierung;
Fig. 6 eine perspektivische Ansicht der Einzelteile des Meßgerätes nach Fig. 1;
Fig. 7 eine perspektivische Draufsicht auf das Innere des Gehäuses des Meßgerätes nach Fig. 5 nach der Montage der Seilsonde;
Fig. 8 eine perspektivische Frontansicht einer Meßgeräte-Elektronik; und
Fig. 9 eine perspektivische Ansicht der Meßgeräte-Elektronik nach Fig. 9 von unten.

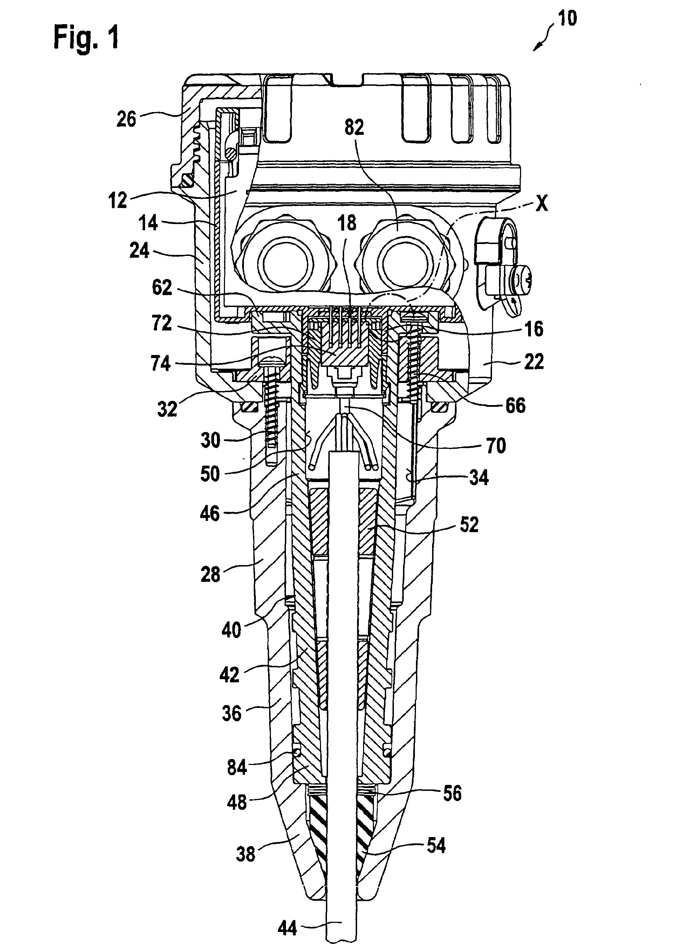

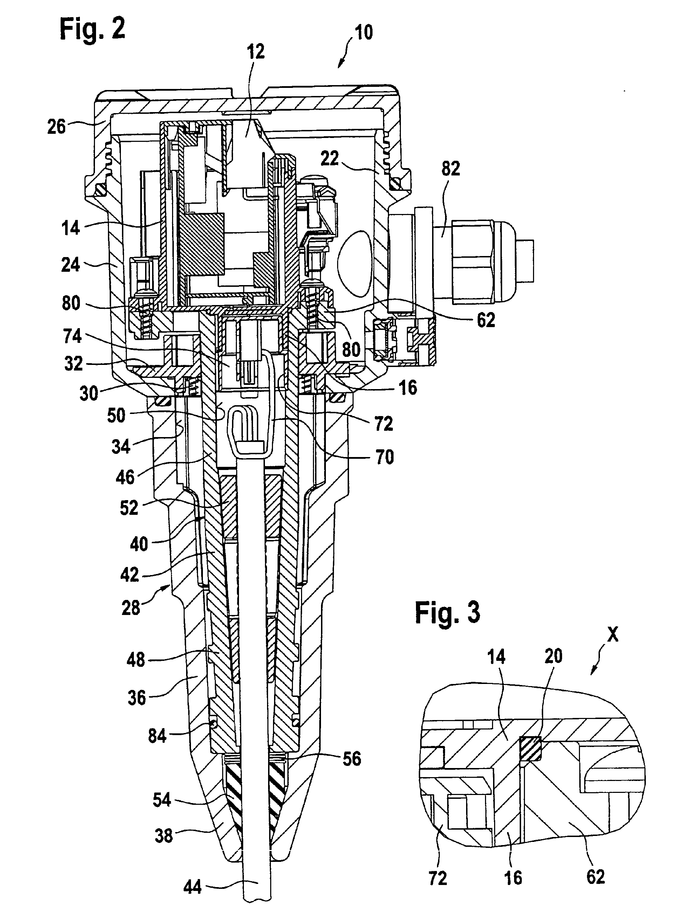

In den Fig. 1 und 2 ist ein erstes Ausführungsbeispiel eines Meßgerätes 10 mit einer Seilsonde 40 nach der Erfindung dargestellt. Das dargestellte Meßgerät 10 kann ein beispielsweise ein an sich bekanntes Füllstandsmeßgerät sein, das an oder auf einem hier nicht dargestellten Behälter derart montiert ist, daß die Seilsonde 40 in ein Medium, dessen Füllstand im Behälter gemessen werden soll, eintaucht. Füllstandsmeßgeräte der hier dargestellten Art sind beispielsweise solche, die es erlauben, den Füllstand kapazitiv oder durch Messung des hydrostatischen Drucks des Mediums im Behälter mittels eines am Ende der Seilsonde 40 angeordneten, hier nicht dargestellten Differenzdrucksensors zu bestimmen. Vorstellbar ist jedoch auch, die Erfindung bei anderen Meßgeräten zu verwenden, bei denen der Füllstand durch auf der Seilsonde geführte elektromechanische Signale ermittelt wird.

Die Meßsignale werden von einer im Meßgerät 10 untergebrachten Meßgeräte-Elektronik 12 in dem Füllstand entsprechende Signale umgewandelt und an eine hier nicht näher dargestellte Prozeßkontroll-Einheit, z.B. eine Meßwarte, weitergeleitet. Denkbar ist auch, daß die dem Füllstand entsprechenden Signale auf einen hier nicht dargestellten und mit einer solchen Prozeßkontroll-Einheit verbundenen Datenbus gegeben werden. Obwohl die Erfindung nachfolgend anhand von Ausführungsbeispielen aus der Füllstandsmeßtechnik erläutert wird, ist für sie jede Art von Meßgeräten mit Seilsonden denkbar.

Ein mit "14" bezeichnetes Elektronik-Gehäuse, das die Meßgeräte-Elektronik 12 umgibt, ist in einem teilweise aufgebrochen dargestellten Gerätegehäuse 22 des Meßgerätes 10, genauer gesagt in einem Gehäusetopf 24 untergebracht. Der Gehäusetopf 24 ist durch einen Deckel 26 verschlossen. Am Gehäusetopf 24 ist eine Anschlußhülse 28 angeordnet, die entweder mit dem Gehäusetopf 24 eine einstückige Einheit bildet oder, wie Fig. 1 und 2 zeigen, am Gehäusetopf 24 befestigt ist, beispielsweise mittels Schrauben 30, die die Anschlußhülse 28 an einer im Gehäusetopf 24 vorgesehenen Befestigungsvorrichtung 32 befestigen.

Die Anschlußhülse 28 nimmt in einer zentralen Öffnung 34 eine Einbauhülse 42 auf, in deren zentraler Öffnung 50 ein Seil 44 der Seilsonde 40 befestigt ist. Die Einbauhülse 42 umfaßt dazu vorzugsweise einen quasi zylindrischen Teil 46 und einen konischen Teil 48, wobei das Seil 44 in der durchgehenden zentralen Öffnung 50 mittels eines Klemmkonus 52 durch Klemmung in einem entsprechend gestalteten konischen Bereich der zentralen Öffnung 50 der Einbauhülse 42 selbsthaltend befestigt ist, wie in den Fig. 1 und 2 gezeigt. Die Anschlußhülse 28 geht in einem unteren Teil 36 in eine Spitze 38 über, wobei in diesem Bereich, genauer gesagt im Innern der Spitze 38 der lichte Innendurchmesser ihrer zentralen Öffnung 34 stetig bis auf etwa den Außendurchmesser des Seiles 44 reduziert ist. Hier ist ein Dichtkonus 54, vorzugsweise aus gummielastischem Material, vorgesehen, der das Seil 44 dichtend umschließt und auch das Innere der Anschlußhülse 28, also ihre zentrale Öffnung 34 abdichtet. Im Innern der Anschlußhülse 28 ist zwischen der Einbauhülse 42 und dem Dichtkonus 54 darüberhinaus, wie die Fig. 1 und 2 zeigen, eine Tellerfeder-Packung 56 vorgesehen, die einerseits unterstützend auf den Dichtkonus 54 wirkt und andererseits, wie später noch erläutert, einen Ausbau der Einbauhülse 42 ermöglicht.

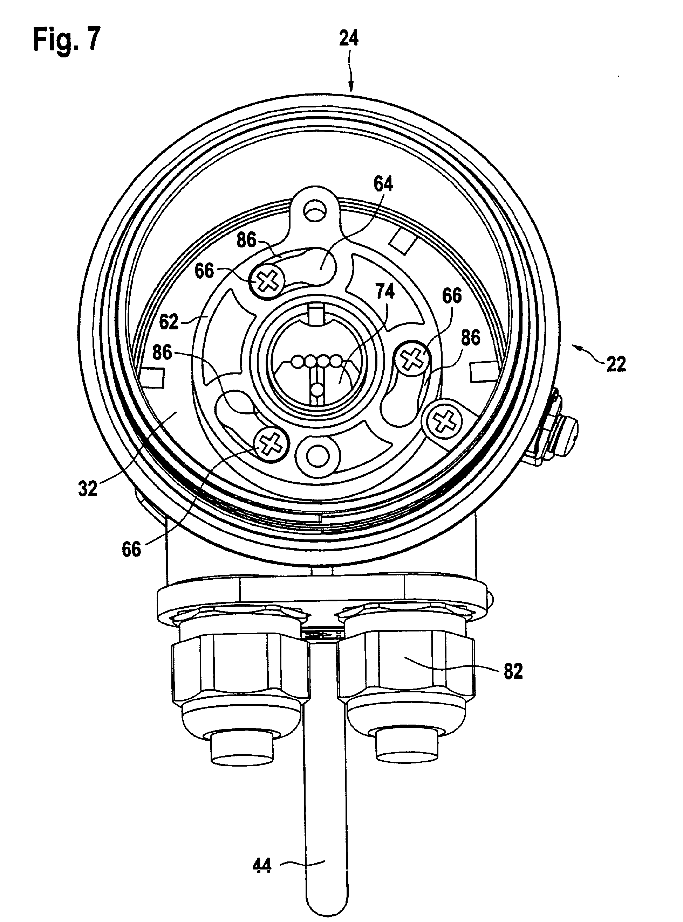

An jenem Ende der Einbauhülse 42, das, wie in den Fig. 1 und 2 dargestellt, über die Anschlußhülse 28 hinausgehend in den Gehäusetopf 24 hineinragt, ist ein Befestigungskragen 62 angebracht, der über den quasi zylindrischen Teil 46 der Einbauhülse 42 nach außen vorsteht. Mittels Schrauben 66, die durch Schraubendurchführungen 64 im Befestigungskragen 62 hindurch geführt und die in der Befestigungsvorrichtung 32 im Gerätegehäuse 22 verankert sind, wird die Einbauhülse 42 und damit die Seilsonde 40 in ihrer Arbeitsposition gehalten und fixiert. Die Schrauben 66 sind beispielsweise handelsübliche Schlitzschrauben, vorzugsweise mit einem Kreuzschlitz-Kopf, wie in Fig. 7 dargestellt.

Weiterhin sind in den Fig. 1 und 2 elektrische Leiter 70 der Seilsonde 40 dargestellt, die im Innern des Seils 44 angeordnet sind. Oberhalb des Klemmkonus 52 sind diese elektrischen Leiter 70 freigelegt und in gewünschter Weise mit einer Stecker-Anschlußbuchse 72 elektrisch verbunden. Die Stecker-Anschlußbuchse 72 ist in einem Steckeinsatz 74 untergebracht, der von der zentralen Öffnung 50 der Einbauhülse 42 aufgenommen und im Bereich der Befestigungsvorrichtung 32 gehalten wird. Am Elektronik-Gehäuse 14 sind geeignete Steckerstifte 18 angebracht, die von einem Stecker-Becher 16 umgeben sind. Beim Einbau der Meßgeräte-Elektronik 12 in den Gehäusetopf 24 werden die Steckerstifte 18 in die Stecker-Anschlußbuchse 72 gesteckt und stellt so eine elektrische Verbindung der elektrischen Leiter 70 mit der Meßgeräte-Elektronik 12 her. Zur korrekten Positionierung der Steckerstifte 18 sind am Stecker-Becher 16 und an der Stecker-Anschlußbuchse 72 geeignete Führungen vorgesehen, die nur eine gewünschte und bevorzugte Position der Steckerstifte 18 zulassen.

Zusätzlich zur Fig. 1 sind in Fig. 2 aufgrund der dem gegenüber gewählten Darstellung eines um 90° um die Längsachse gedrehten Längsschnittes zwei Befestigungsschrauben 80 dargestellt, mittels derer das Elektronik-Gehäuse 14, also damit die Meßgeräte-Elektronik 12 in seiner Position im Gehäusetopf 24 befestigt ist. Die Befestigungsschrauben 80 sind vorzugsweise vom gleichen handelsüblichen Typ wie die Schrauben 66, beispielsweise also Schrauben mit einem Kreuzschlitz-Kopf. Zur Vervollständigung sind in den Fig. 1 und 2 auch Kabeldurchführungen 82 dargestellt, durch die Kabel zur Verbindung der Meßgeräte-Elektronik 12 mit der Meßwarte aus dem Gerätegehäuse 22 herausgeführt wird.

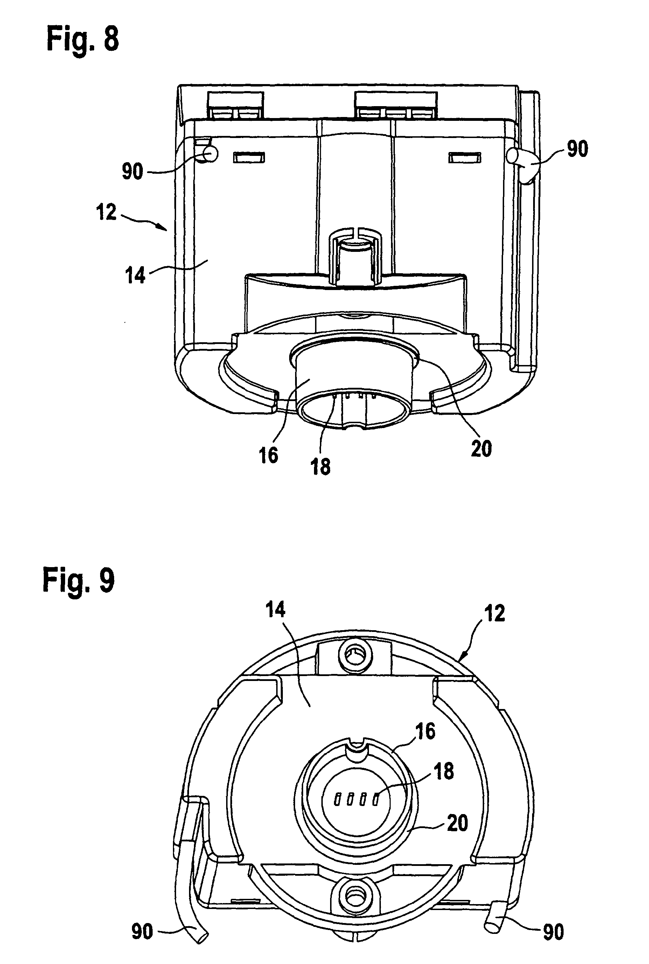

Fig. 3 zeigt eine Einzelheit X der Fig. 1. Hier ist als besondere Ausstattung des Meßgerätes 10 eine erste Elastomer-Dichtung 20 dargestellt, die einen Zwischenraum zwischen dem Stecker-Becher 16 des Elektronik-Gehäuses 14 und dem Befestigungskragen 62 der Einbauhülse 42 abdichtet. Diese erste Elastomer-Dichtung 20 kann an einen entsprechenden Dichtungssitz in der Einbauhülse 42 eingesetzt werden. Vorzugsweise ist die erste Elastomer-Dichtung 20 jedoch am Stecker-Becher 16 angebracht, wie in den Fig. 8 und 9 dargestellt ist. Sie kann in diesem Fall der Einfachheit halber dort angespritzt sein. Die erste Elastomer-Dichtung 20 sorgt zusammen mit einer auf dem konischen Teil 48 der Einbauhülse 42 vorgesehenen zweiten Elastomer-Dichtung 84, die in den Fig. 1 und 2 dargestellt ist, dafür, daß das Meßgerät 10 - für den theoretischen Fall eines Abrisses des Seils 44 im Betrieb - auch die weitestgehensten Anforderungen in Bezug auf absolute Dichtigkeit gegenüber dem Medium bzw. sonstigen Einflüssen aus dem Behälter erfüllt. Mit beiden Elastomer-Dichtungen ist sichergestellt, daß der Gehäusetopf 24, der die Meßgeräte-Elektronik 12 aufnimmt, in allen Fällen sowohl gegenüber dem Innenraum, also der zentralen Öffnung 34 der Anschlußhülse 28 als auch gegenüber dem Innenraum, also der zentralen Öffnung 50 der Einbauhülse 42 abgedichtet ist. Es ist klar, daß die Elastomer-Dichtungen 20 und 84 nur in den Fällen verwendet werden, wo seitens einer Zulassungsbehörde verschärfte Anforderungen an die Dichtigkeit gegenüber dem Medium gestellt werden. Bei den meisten, üblichen Anwendungen sind daher die Dichtungen 20 und 84 nicht erforderlich.

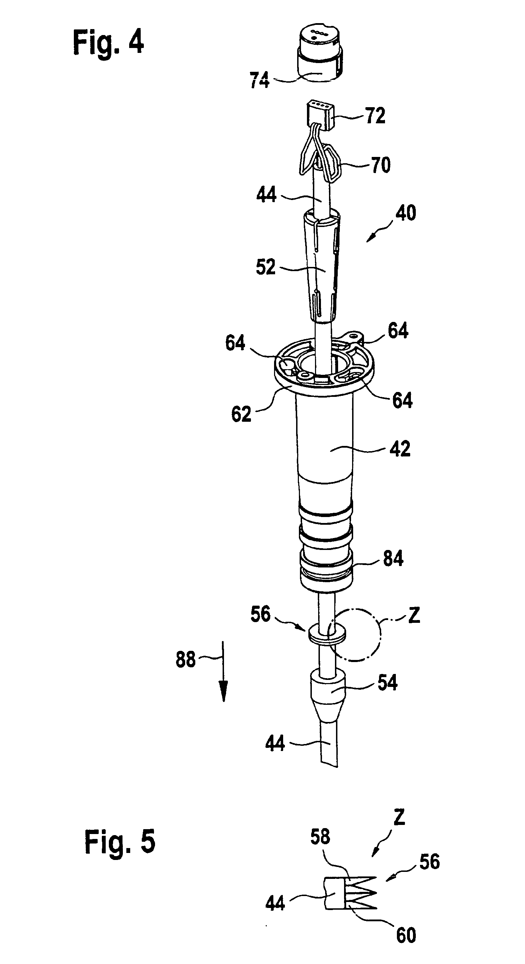

In der Fig. 4 ist die Seilsonde 40 in demontiertem Zustand und ohne umgebende Anschlußhülse 28 dargestellt. Es ist deutlich zu sehen, wie der Dichtkonus 54 das Seil 44 dicht umschließt. Zwischen dem Dichtkonus 54 und der Einbauhülse 42 ist die Tellerfeder-Packung 56 über das Seil 44 geschoben, deren Schachtelung genauer in Fig. 5 abgebildet ist. Hieraus geht hervor, daß die einzelnen Tellerfedern möglichst gegensinnig aufeinander angeordnet werden, damit sie bei Entlastung den größtmöglichen Hub ermöglichen. Eine hier entsprechend der gewählten Darstellung als "oberste" bezeichnete Tellerfeder 58 und eine demgemäß als "unterste" bezeichnete Tellerfeder 60 weisen jeweils mit ihrer breiten Anlagefläche zur Einbauhülse 42 bzw. zum Dichtkonus 54.

Fig. 4 veranschaulicht außerdem den Aufbau des Befestigungskragens 62 der Einbauhülse 42. Die Schraubendurchführungen 64, vorzugsweise drei, sind als Langlöcher ausgebildet und erlauben das Durchstecken der Befestigungsschrauben 66 oder daß der Befestigungskragen 62 über bereits im Gerätegehäuse 22 (siehe dazu Fig. 1, 2 oder 7) befestigte Schrauben 66 gestülpt werden kann. Die Schraubendurchführungen 64 weisen vorzugsweise jeweils innen Auflageflächen 86 auf, an denen die Schraubenköpfe aufliegen können, um beim Anziehen der Schrauben 66 so die Einbauhülse 42 zu befestigen, wie in Fig. 7 dargestellt ist. Üblicherweise wird dazu, wie erwähnt, der Befestigungskragen 62 über die Schrauben 66 gestülpt und um die zentrale Längsachse der Einbauhülse 42 gedreht. Ähnlich einem sogenannten Bajonett-Verschluß werden die Schrauben 66 in den Schraubendurchführungen 64 geführt und begrenzen die Drehbewegung. Wenn die Schrauben 66 die gewünschte Position in Bezug auf die Auflageflächen 86 (siehe Fig. 7) erreicht haben, werden sie angezogen.

Der in Fig. 4 abgebildete Klemmkonus 52 ist oberhalb der Einbauhülse 42 auf dem Seil 44 angeordnet. Ebenfalls sind die elektrischen Leiter 70 des Seils 44 zu sehen, die oberhalb des Klemmkonus 52 von einer sie umgebenden Isolation befreit sind und in die Stecker-Anschlußbuchse 72 münden, wo sie mit den jeweils gewünschten Anschlußkontakten verbunden sind.

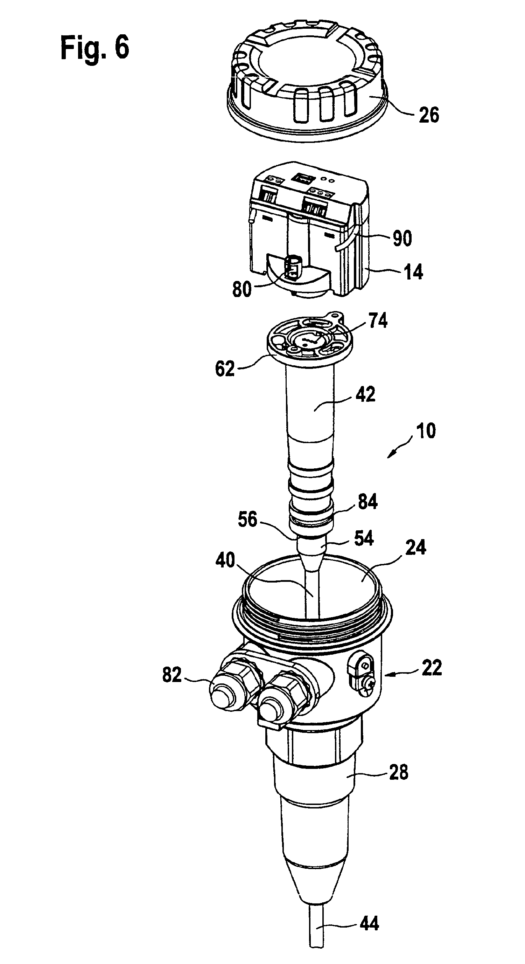

Durch Ziehen des Seils 44 in die durch einen Pfeil 88 veranschaulichte Richtung wird es mit dem Klemmkonus 52 in die Einbauhülse 42 hineingezogen und dort fest verklemmt. Ein Abstand zwischen dem Klemmkonus 52 und der Stecker-Anschlußbuchse 72 ist dabei so gewählt worden, daß die Stecker-Anschlußbuchse 72 und der sie umgebende Steckeinsatz 74 von der Einbauhülse 42 aufgenommen werden, wie in den Fig. 1 und 2 bereits gezeigt, wobei für die elektrischen Leiter 70 eine gewisse Länge in Form von Sicherheitsschlaufen vorgesehen werden sollte. Nach Hineinziehen des Klemmkonus 52 (mit dem Seil 44) in die Einbauhülse 42 wird die Tellerfeder-Packung 56 zusammen mit dem Dichtkonus 54 dicht an die Einbauhülse 42 herangeschoben, die wie es in Fig. 6 veranschaulicht ist. Diese Vorgehensweise ist jedoch nicht in jedem Fall erforderlich. Üblicherweise dürfte es ausreichen, am Seil 44 außerhalb der Anschlußhülse 28 zu ziehen, um dadurch den Dichtkonus 54, die Tellerfeder-Packung 56 und die Einbauhülse 42 mit dem darin verklemmten Klemmkonus 52 in die Anschlußhülse 28 zu hineinzuziehen.

Die Einbauhülse 42 bildet mit der Stecker-Anschlußbuchse 72 im Steckeinsatz 74, dem in der Einbauhülse 42 befindlichen und mittels Klemmkonus 52 befestigten Seil 44 und zusammen mit einem daran befestigten, hier nicht dargestellten Sensor die vorstehend als Seilsonde 40 bezeichnete Einheit. Fig. 7 zeigt in einer Ansicht in das Innere des Gehäusetopfes 24 des Gerätegehäuses 22 die dort montierte Seilsonde 40, nachdem die Seilsonde 40, genauer gesagt ihre Einbauhülse 42 in den Gehäusetopf 24 und die Anschlußhülse 28 hineingezogen und dort durch die Schrauben 66 in der gewünschten Position befestigt worden ist.

Nachdem die Meßgeräte-Elektronik 12 im Elektronik-Gehäuses 14 so in den Gehäusetopf 24 ein- und auf den Befestigungskragen 62 aufgesetzt wurde, daß die Steckerstifte 18 am Elektronik-Gehäuses 14 in die Stecker-Anschlußbuchse 72 fassen, wird das Elektronik-Gehäuses 14 mittels der Schrauben 80 (siehe dazu auch Fig. 2) in seiner Position im Gehäusetopf 24 befestigt. Nach Durchführen von Anschlußkabeln 90 zur Meßwarte durch die Kabeldurchführungen 82 wird das Gerätegehäuse 22 mit dem in Fig. 6 dargestellten Deckel 26 verschlossen. Diese Situation ist, wie oben bereits geschildert in den Fig. 1 und 2 dargestellt.

In den Fig. 8 und 9 ist noch einmal das Elektronik-Gehäuse 14 dargestellt, das die Meßgeräte-Elektronik 12 aufnimmt. Hier ist der die Steckerstifte 18 umschließende Stecker-Becher 16 gezeigt. Dieser Stecker-Becher 16 schützt einerseits die Steckerstifte 18 und sorgt andererseits durch seine besondere Formgebung mit einer Art Führungsnase dafür, daß er und damit das Elektronik-Gehäuse 14 nur in einer gewünschten, richtigen Position auf die Einbauhülse 42 aufgesetzt werden kann. Die besagte Führungsnase greift dazu in eine entsprechende Ausnehmung im Steckeinsatz 74 ein (siehe dazu Fig. 4 und 7), wodurch gewährleistet wird, daß nur so das Elektronik-Gehäuse 14 vollständig vom Gehäusetopf 24 aufgenommen werden und dieser vom Deckel 26 verschlossen werden kann (siehe dazu Fig. 1 und 2).

Deutlich zu sehen ist hier auch die bereits erwähnte und im Grund des Stecker-Bechers 16 auf dem Elektronik-Gehäuse 14 vorgesehene erste Elastomer-Dichtung 20, die dem Meßgerät 10 mit Seilsonde 40 nach der Erfindung ermöglicht, auch verschärften Anforderungen an die Dichtigkeit zu genügen. Vorzugsweise sind auch die Stecker-Stifte 18 in ihrem Grund am Elektronik-Gehäuse 14 von einer dünnen Schicht gummielastischen Materials umspritzt, so daß auch ihre Durchführung im Elektronik-Gehäuse 14 zuverlässig abgedichtet ist. Zur Vereinfachung sind in den Fig. 8 und 9 die Anschlußkabel 90 nur angedeutet.

Bisher wurde der vorteilhafte Aufbau und die Montage des Meßgerätes 10 mit der Seilsonde 40 nach der Erfindung erläutert. Ein besonderer Vorteil der Erfindung ist jedoch, daß sie auf einfache Weise eine Kürzung des Seils 44 ermöglicht. Nach Lösen und Abnehmen des Deckels 26 vom Gerätegehäuse 22 werden die Anschlußkabel 90 gelöst und die Befestigungsschrauben 80 des mittels üblichem Schraubendreher vollständig gelöst. Anschließend wird die im Elektronik-Gehäuses 14 untergebrachte Meßgeräte-Elektronik 12 von der Einbauhülse 42 abgezogen und die Steckverbindung zur Stecker-Anschlußbuchse 72 der Seilsonde 40 getrennt. Nach Entnahme der Meßgeräte-Elektronik 12 aus dem Gerätegehäuse 22 ergibt sich die in Fig. 7 dargestellte Ansicht. Es ist nicht erforderlich, das Meßgerät 10 von einem Behälter, an dem oder auf dem es befestigt ist, zu demontieren oder zu entfernen.

Lösen der Schrauben 66 bewirkt, daß die unter Federspannung stehende Tellerfeder-Packung 56 entlastet wird und die Einbauhülse 42 aus ihrem bisherigen Sitz gedrückt wird. Durch die besondere Formgebung der Schrauben-Durchführungen 64 mit den Auflagen 86 (siehe dazu Fig. 7) wird der Hub der Einbauhülse 42 begrenzt. Weiteres Lösen der Schrauben 66, aber ohne daß sie vollständig aus ihrem Sitz entfernt werden müssen, ermöglicht eine geringe Drehung der Einbauhülse 42 und damit der Seilsonde 40 um ihre Längsachse, und zwar soweit, daß die Seilsonde 40 über die Schrauben 66 abgehoben und aus dem Gerätegehäuse 22 herausgezogen werden kann, so wie es in Fig. 6 veranschaulicht ist.

Zum Kürzen des Seils 44 bieten sich nun zwei Möglichkeiten an. Entweder werden die Einbauhülse 42, der Klemmkonus 52 sowie die Tellerfeder-Packung 56 und der Dichtkonus 54 weiter verwendet oder nicht.

Im zweiten Fall, der vermutlich der in Praxis häufiger vorkommen wird, wird die Seilsonde 40 um etwas mehr als die gewünschte Kürzungslänge aus dem Gerätegehäuse 22 herausgezogen und das Seil entsprechend durchschnitten, vorzugsweise mit einem üblichen Werkzeug. Anschließend und nach Entfernen der bisherigen Einbauhülse 42 und des bisherigen Dichtkonus 54 werden ein neuer Dichtkonus 54, eine neue Tellerfedern-Packung 56, eine neue Einbauhülse 42 und ein neuer Klemmkonus 52 über das gekürzte Seil 44 geschoben. Die elektrischen Leiter 70 des Seils 44 werden freigelegt, ihre Isolierung entfernt und mit einer neuen Stecker-Anschlußbuchse 72 verbunden, wie in Fig. 4 gezeigt ist. Wenn im Seil 44 als Armierung bzw. Abschirmung eine Geflecht aus Stahlfäden verwendet sein sollte, so versteht es sich von selbst, daß dieses ebenfalls entsprechend gekürzt werden muß. Nach dem Aufsetzen eines neuen Steckeinsatzes 74 auf die Stecker-Anschlußbuchse 72 wird der Klemmkonus 42 zusammen mit der Tellerfedern-Packung 56 und dem Dichtkonus 54 wieder in das Gerätegehäuse 22 hineingezogen und die Einbauhülse über die Schrauben 66 geschoben. Nach einer leichten Drehbewegung können die Schrauben 66 angezogen und die Meßgeräte-Elektronik 12 aufgesetzt werden. Nach Befestigen des Elektronik-Gehäuses in der gewünschten Position und Anschluß der Anschlußkabel 90 kann das Gerätegehäuse 22 wieder durch den Deckel 26 verschlossen werden und ist prinzipiell wieder einsatzbereit.

Natürlich können, wie in dem oben erwähnten ersten Fall einer Kürzung des Seiles 44 vorgesehen, auch der Dichtkonus 54, die Tellerfeder-Packung 56, die Einbauhülse 42, der Klemmkonus 52 sowie die Stecker-Anschlußbuchse 72 und der Steckeinsatz 74 wiederverwendet werden. In jedem der beiden geschilderten Fälle erlaubt die Erfindung auf einfache Weise das Seil 44 der Seilsonde 40 zu kürzen und zwar im Feld und mit üblichem, von dort tätigen Personen mitgeführtem Werkzeug.

### Bezugszeichenliste:

- 10: Meßgerät
- 12: Meßgeräte-Elektronik
- 14: Elektronik-Gehäuse
- 16: Stecker-Becher
- 18: Steckerstifte
- 20: erste Elastomer-Dichtung
- 22: Gerätegehäuse
- 24: Gehäusetopf
- 26: Deckel
- 28: Anschlußhülse
- 30: Schraube zur Befestigung der Anschlußhülse
- 32: Befestigungsvorrichtung
- 34: zentrale Öffnung der Anschlußhülse
- 36: unterer Teil der Anschlußhülse
- 38: Spitze der Anschlußhülse
- 40: Seilsonde
- 42: Einbauhülse
- 44: Seil
- 46: quasi-zylindrischer Teil der Einbauhülse
- 48: konischer Teil der Einbauhülse
- 50: zentrale Öffnung der Einbauhülse (42)
- 52: Klemmkonus
- 54: Dichtkonus
- 56: Tellerfeder-Packung
- 58: oberste Tellerfeder
- 60: unterste Tellerfeder
- 62: Befestigungskragen der Einbauhülse
- 64: Schrauben-Durchführungen
- 66: Schraube zur Befestigung der Einbauhülse
- 70: elektrische Leiter
- 72: Stecker-Anschlußbuchse
- 74: Steckeinsatz
- 80: Befestigungsschraube für Meßgeräte-Elektronik
- 82: Kabeldurchführung
- 84: zweite Elastomer-Dichtung
- 86: Auflage für Schraube (66)
- 88: Pfeilrichtung

## Patentansprüche

1. Meßgerät (10)
- mit einem eine Meßgeräte-Elektronik (12) aufnehmenden Gerätegehäuse (22),
- mit einer darin befestigten Seilsonde (40),
- die eine im Inneren des Gerätegehäuses (22) vorgesehene Einbauhülse (42) mit einem Befestigungskragen (62) umfaßt,
- die im Innern des Gerätegehäuses (22) durch eine Drehung um ihre Längsachse montierbar oder demontierbar ist
- und deren Arbeitsposition mittels des Befestigungskragens (62) durch mehrere Schrauben (66) nach Art eines Bajonett-Verschlusses fixiert wird.

2. Meßgerät (10) nach Anspruch 1, bei dem die Seilsonde (40) ein Seil (44) umfaßt, das in der Einbauhülse (42) mittels eines das Seil (44) umschließenden Klemmkonus (52) befestigt ist.

3. Meßgerät (10) nach Anspruch 2, bei dem die Einbauhülse (42) von einer Anschlußhülse (28) des Gerätegehäuses (22) umschlossen wird.

4. Meßgerät (10) nach einem der Ansprüche 2 oder 3, bei dem im Innern des Seils (44) der Seilsonde (40) befindliche und in der Einbauhülse (42) herausgeführte elektrische Leiter (70) mit einem Stecker und/oder einer Stecker-Anschlußbuchse (72) verbunden sind.

5. Meßgerät (10) nach Anspruch 4, bei dem der Stecker und/oder die Stecker-Anschlußbuchse (72) von der Einbauhülse (42) aufgenommen wird oder werden.

6. Meßgerät (10) nach einem der vorgehenden Ansprüche 3 bis 5, bei dem ein Innenraum (34) der Anschlußhülse (28) gegenüber einem zu messenden Medium durch eine im Innern der Anschlußhülse (28) befindliche und das Seil (44) umschließenden Dichtkonus (54) abgedichtet ist.

7. Meßgerät (10) nach einem der vorgehenden Ansprüche 3 bis 6, bei dem auf der Meßgeräte-Elektronik (12) eine erste Elastomer-Dichtung (20) derart angeordnet ist, daß sie einen die Meßgeräte-Elektronik (12) aufbehmenden Gehäusetopf (24) des Gerätegehäuses (22) gegenüber einem Innenraum (50) der Einbauhülse (42) abdichtet.

8. Meßgerät (10) nach einem der vorgehenden Ansprüche 3 bis 7, bei dem eine zweite Elastomer-Dichtung (84) auf der Einbauhülse (42) so angeordnet ist, daß sie einen die Meßgeräte-Elektronik (12) aufbehmenden Gehäusetopf (24) des Gerätegehäuses (22) gegenüber einem Innenraum (34) der die Seilsonde (40) aufnehmenden Anschlußhülse (28) abgedichtet ist.

9. Verfahren zum Kürzen eines in einem Gerätegehäuse (22) eines Meßgerätes (10) befestigten Seils (44) einer Seilsonde (40) mit folgenden Verfahrensschritten:
a) nach Öffnen des Gerätegehäuses (22) wird eine Meßgeräte-Elektronik (12) entnommen;
b) elektrische Verbindungen (18, 72) zwischen der Meßgeräte-Elektronik (12) und der Seilsonde (40) werden unterbrochen;
c) mehrere Schrauben (66), die einen Befestigungskragen (62) an einer das Seil (44) umschließenden Einbauhülse (42) nach Art eines Bajonett-Verschlusses halten, werden gelöst, wodurch wenigstens eine das Seil (44) umschließende und gegenüber dem zu messenden Medium wirkende Dichtung (54) in einer das Seil (44) der Seilsonde (40) umgebenden Anschlußhülse (28) entlastet wird;
d) die Einbauhülse (42) wird zusammen mit dem Seil (44) und der Dichtung (54) aus dem Gerätegehäuse (22) gezogen;
e) das Seil (44) wird um eine gewünschte Länge gekürzt;
f) über das verbliebene Seil (44) der Seilsonde (40) wird erneut eine Dichtung (54), eine Einbauhülse (42) und ein Klemmkonus (52) gezogen und das Seil (44) durch Einziehen in eine Einbauhülse (42) darin befestigt;
g) dann wird die Einbauhülse (42) im Gerätegehäuse (22) befestigt;
h) die elektrischen Verbindungen (18, 74) zwischen der Seilsonde (40) und der Meßgeräte-Elektronik (12) werden wieder hergestellt;
i) nach Einbau der Meßgeräte-Elektronik (12) wird das Gerätegehäuse (22) wieder verschlossen.

## Claims

1. Measuring device (10)
- with a device housing (22) accommodating measuring device electronics (12)
- with a rope probe (40) secured in the housing
-- which comprises a mounting sleeve (42) with a securing collar (62) provided inside the device housing (22)
-- which can be mounted or disassembled inside the device housing (22) by rotating it around its longitudinal axis
-- and whose operating position is fixed by the securing collar (62) using several screws (66) in a way that is similar to a bayonet lock.

2. Measuring device (10) as per Claim 1, **characterized in that** the rope probe (40) comprises a rope (44) that is secured in the mounting sleeve (42) using a chuck cone (52) surrounding the rope (44).

3. Measuring device (10) as per Claim 2, **characterized in that** the mounting sleeve (42) is surrounded by a connection sleeve (28) of the device housing (22).

4. Measuring device (10) as per one of the Claims 2 or 3, **characterized in that** the electrical wire (70) - which is located inside the rope (44) of the rope probe (40) and leads out into the mounting sleeve (42) - is connected to a plug and/or a plug connection socket (72).

5. Measuring device (10) as per Claim 4, **characterized in that** the plug and/or the plug connection socket (72) is/are accommodated by the mounting sleeve (42).

6. Measuring device (10) as per one of the previous Claims 3 to 5, **characterized in that** an internal compartment (34) of the connection sleeve (28) is sealed against a medium to be measured by a sealing taper (54) located inside the connection sleeve (28) and surrounding the rope (44).

7. Measuring device (10) as per one of the previous Claims 3 to 6, **characterized in that** a first elastomer seal (20) is arranged on the measuring device electronics (12) in such a way that it seals a housing enclosure (24) of the device housing (22), which accommodates the device electronics, (22) against an internal compartment (50).

8. Measuring device (10) as per one of the previous Claims 3 to 7, **characterized in that** a second elastomer seal (84) is arranged on the mounting sleeve (42) in such a way that a housing enclosure (24) of the device housing (22), which accommodates the device electronics, is sealed against an internal compartment (34) of the connection sleeve (28) that accommodates the rope probe (40).

9. Process for shortening a rope (44) of a rope probe (40), said rope being secured in a device housing (22) of a measuring device (10) with the following process steps:
a) measuring device electronics (12) are removed when the device housing (22) is opened;
b) electrical connections (18, 72) between the measuring device electronics (12) and the rope probe (40) are disconnected;
c) several screws (66) that secure a securing collar (62) to a mounting sleeve (42) surrounding the rope (44) like a bayonet lock are released, which releases at least one seal (54), which surrounds the rope (44) and acts on the medium to be measured, in a connection sleeve (28) surrounding the rope (44) of the rope probe (40).
d) the mounting sleeve (42) is removed from the device housing (22) together with the rope (44) and the seal (54);
e) the rope (44) is shortened to the preferred length;
f) a seal (54), a mounting sleeve (42) and a chuck cone (52) are passed over the remaining rope (44) of the rope probe (40), and the rope (44) is secured in a mounting sleeve (42) by inserting it into the sleeve;
g) the mounting sleeve (42) is then secured in the device housing (22);
h) the electrical connections (18, 74) between the rope probe (40) and the measuring device electronics (12) are re-established;
i) the device housing (22) is sealed again once the measuring device electronics are installed.

## Revendications

1. Appareil de mesure (10)
- avec un boîtier d'appareil (22), dans lequel est logée une électronique d'appareil de mesure (12),
- avec une sonde à câble (40) fixée à l'intérieur
-- laquelle sonde comprend une douille de montage (42) pourvue d'un collet de fixation (62), prévue à l'intérieur du boîtier d'appareil (22)
-- laquelle sonde peut être montée ou démontée à l'intérieur du boîtier d'appareil (22) par une rotation autour de son axe longitudinal
-- et dont la position de travail est fixée au moyen du collet de fixation (62) avec plusieurs vis (66) d'après le principe d'une fermeture à baïonnette.

2. Appareil de mesure (10) selon la revendication 1, pour lequel la sonde à câble (40) comprend un câble (44), qui est fixé dans la douille de montage (42) au moyen d'un cône de serrage (52) entourant le câble (44).

3. Appareil de mesure (10) selon la revendication 2, pour lequel la douille de montage (42) est entourée par une douille de raccordement (28) du boîtier d'appareil (22).

4. Appareil de mesure (10) selon l'une des revendications 2 ou 3, pour lequel les conducteurs électriques (70) se trouvant à l'intérieur du câble (44) de la sonde à câble (40) et sortant de la douille de montage (42) sont reliés avec un connecteur mâle et/ou un connecteur de raccordement femelle (72).

5. Appareil de mesure (10) selon la revendication 4, pour lequel le connecteur mâle et/ou le connecteur de raccordement femelle (72) est/sont logé (s) dans la douille de montage (42).

6. Appareil de mesure (10) selon l'une des revendications 3 à 5 précédentes, pour lequel un espace intérieur (34) de la douille de raccordement (28) est rendu étanche par rapport à un produit à mesurer au moyen d'un cône d'étanchéité (54) situé à l'intérieur de la douille de raccordement (28) et entourant le câble (44).

7. Appareil de mesure (10) selon l'une des revendications 3 à 6 précédentes, pour lequel est disposé, sur l'électronique d'appareil de mesure (12), un premier joint en élastomère (20), de telle manière à rendre étanche un pot (24) du boîtier d'appareil (22), pot dans lequel est logée l'électronique d'appareil de mesure (12), par rapport à un espace intérieur (50) de la douille de montage (42).

8. Appareil de mesure (10) selon l'une des revendications 3 à 7 précédentes, pour lequel un deuxième joint en élastomère (84) est disposé sur la douille de montage (42), de telle manière à rendre étanche un pot (24) du boîtier d'appareil (22), pot dans lequel est logée l'électronique d'appareil de mesure (12), par rapport à un espace intérieur (34) de la douille de raccordement (34), dans laquelle est logée la sonde à câble (40).

9. Procédé destiné au raccourcissement d'un câble (44) d'une sonde à câble (40) fixée dans le boîtier (22) d'un appareil de mesure (10), avec les étapes de procédé suivantes :
a) après l'ouverture du boîtier d'appareil (22), une électronique d'appareil de mesure (12) est extraite ;
b) les liaisons électriques (18, 72) entre l'électronique d'appareil de terrain (12) et la sonde à câble (40) sont interrompues ;
c) plusieurs vis (66), qui maintiennent un collet de fixation (62) sur une douille de montage (42) entourant le câble (44) d'après le principe d'une fermeture à baïonnette, sont desserrées, ce par quoi est déchargé au moins un joint d'étanchéité entourant le câble et agissant par rapport au produit à mesurer, situé dans une douille de raccordement (28) entourant le câble (44) de la sonde à câble (40) ;
d) la douille de montage (42) est extraite du boîtier d'appareil (22), conjointement avec le câble (44) et le joint d'étanchéité (54) ;
e) le câble (44) est raccourci d'une longueur souhaitée ;
f) un joint d'étanchéité (54), une douille de montage (42) et un cône de serrage (52) sont de nouveau enfilés dans le câble restant (44) de la sonde à câble (40), et le câble (44) y est fixé par introduction dans la douille de montage (42) ;
g) ensuite, la douille de montage (42) est fixée dans le boîtier d'appareil (22) ;
h) les liaisons électriques (18, 74) entre la sonde à câble (40) et l'électronique d'appareil de mesure (12) sont rétablies ;
i) après montage de l'électronique d'appareil de mesure (12), le boîtier d'appareil (22) est de nouveau fermé.
